# EUROPÄISCHE PATENTANMELDUNG

(11) **EP 3 835 634 A1**
(43) Veröffentlichungstag der Anmeldung: **16.06.2021**
(21) Anmeldenummer: 20212522.5
(22) Anmeldetag: 08.12.2020
(51) Int. Cl.: F16K 17/04, F16K 31/06

(54) **VENTIL**

(30) Priorität: 11.12.2019 DE 102019133996
(71) Anmelder: A. u. K. Müller GmbH & Co. KG, 40595 Düsseldorf (DE)
(72) Erfinder:
(74) Vertreter: Feder Walter Ebert

(57) **Zusammenfassung**

Die Erfindung betrifft ein Ventil (1), insbesondere ein Elektromagnetventil, zur Steuerung eines Fluidstroms mit einem Ventilgehäuse (4), das einen Ventileinlasskanal (2), einen Ventilauslasskanal (3) und ein zwischen dem Ventileinlasskanal (2) und dem Ventilauslasskanal (3) angeordneten Hauptventilsitz (5) aufweist, wobei das Ventilgehäuse (4) einen Druckentlastungskanal (5) mit einer den Druckentlastungskanal (5) zum Abbau von Druckspitzen öffnenden Überdruckeinheit (6) aufweist. Ferner betrifft die Erfindung ein Verfahren zum Abbau des Drucks in einem Ventileinlasskanal (2) eines Ventils (1).

## Beschreibung

Die Erfindung betrifft ein Ventil, insbesondere ein Elektromagnetventil, zur Steuerung eines Fluidstroms mit einem Ventilgehäuse, das einen Ventileinlasskanal, einen Ventilauslasskanal und ein zwischen dem Ventileinlasskanal und dem Ventilauslasskanal angeordneten Hauptventilsitz aufweist. Weiterhin betrifft die Erfindung ein Verfahren zum Abbau des Drucks in einem Ventil.

Derartige Ventile werden in ganz unterschiedlichen technischen Bereichen eingesetzt, beispielsweise in Sanitärarmaturen in der Haustechnik oder auch im Anlagen- und Apparatebau, wenn Fluidströme geschaltet werden müssen. Zum Schalten des Fluidstroms ist zwischen dem Ventileinlasskanal und dem Ventilauslasskanal ein Hauptventilsitz vorgesehen. Wenn der Hauptventilsitz verschlossen ist, kann kein Fluid vom Ventileinlasskanal zum Ventilauslasskanal gelangen und der Fluidstrom ist gestoppt. Wird der Hauptventilsitz wieder geöffnet, kann das Fluid den Hauptventilsitz passieren und vom Ventileinlasskanal zum Ventilauslasskanal strömen.

Damit das Fluid durch das Ventil strömen kann, ist es erforderlich, dass über dem Ventil ein treibendes Druckgefälle anliegt. Der herrschende Druck am Ventileinlasskanal ist daher in der Regel größer als der Druck am Ventilauslasskanal. Bei sanitären Einrichtungen liegt am Ventilauslasskanal oft der Umgebungsdruck und am Ventileinlasskanal ein entsprechend größerer Druck an, so dass beim Öffnen des Ventils das Fluid dem Druckgefälle folgend selbstständig vom Ventileinlasskanal zum Ventileinlasskanal strömt.

Zwar haben sich entsprechende Ventile in der Vergangenheit bewährt und werden auch vielfach eingesetzt, jedoch hat sich in der Praxis herausgestellt, dass Druckschwankungen innerhalb der Leitungssysteme und insbesondere Druckerhöhungen im Ventileinlasskanal zu Problemen führen können. Wenn solche Druckerhöhungen einen maximal tolerierbaren Schwellwert überschreiten, spricht man auch von einer Druckspitze. Diese Druckspitzen können in Form von vergleichsweise großen, über einen kurzen Zeitraum wirkenden Drücken auftreten oder auch in Form von stetig ansteigenden Druckerhöhungen, die einen vorgegebenen maximalen Druckschwellwert überschreiten. Zudem werden innerhalb des Leitungssystems häufig auch Rückflussverhinderer eingesetzt, die dazu führen, dass sich solche Druckspitzen nicht in Richtung des Leitungssystems abbauen können. Weitere Druckerhöhungen können auch durch thermische Effekte hervorgerufen werden.

Aufgrund dieser Druckerhöhungen ergeben sich daher auch vergleichsweise große Kräfte, die auf die anliegenden Bauteile wirken und die in ungünstigsten Situationen dazu führen können, dass diese beschädigt werden und es sogar zu einem Ausfall oder einer Funktionsstörung des Ventils kommen kann.

Um die Gefahr solcher Druckspitzen zu verringern, kann beispielsweise ein Druckentlastungskanal durch das den Hauptventilsitz verschließende Hauptschließelement geführt werden. Über diesen Druckentlastungskanal können dann Druckspitzen im Ventileinlasskanal abgebaut werden. Eine solches Ventil ist bspw. in der EP 3 324 088 A1 beschrieben. Wenngleich sich dieses Ventil in Praxis bewährt hat, ist es jedoch vergleichsweise komplex aufgebaut und der Druckentlastungskanal sowie auch weitere Komponenten müssen sich bei einer Bewegung des Hauptschließelements mitbewegen.

Davon ausgehend stellt sich die vorliegende Erfindung die **Aufgabe** , ein Ventil anzugeben, welches den Abbau von Druckspitzen im Ventileinlasskanal auf konstruktiv einfache Weise ermöglicht.

Diese Aufgabe wird bei einem Ventil der eingangs genannten Art dadurch **gelöst**, dass das Ventilgehäuse einen Druckentlastungskanal mit einer den Druckentlastungskanal zum Abbau von Druckspitzen öffnenden Überdruckeinheit aufweist.

Durch die Ausgestaltung des Druckentlastungskanals als Teil des Ventilgehäuses ergibt sich eine einfache Konstruktion, mit der Druckspitzen zuverlässig abgebaut werden können. Der Druckentlastungskanal und auch die Überdruckeinheit müssen bei einer Betätigung des Ventils nicht mitbewegt werden, so dass das Hauptschließelement konstruktiv sehr einfach ausgestaltet sein kann.

Im Normalfall verschließt die Überdruckeinheit den Druckentlastungskanal, so dass kein Fluid durch diesen hindurch strömen kann. Wenn es zu einem Druckanstieg im Ventileinlasskanal kommt, der oberhalb eines vordefinierten Schwellwertes liegt, öffnet die Überdruckeinheit den Druckentlastungskanal, so dass Fluid durch den Druckentlastungskanal aus dem Ventileinlasskanal strömen kann. Durch diesen Abfluss sinkt dann der Druck im Ventileinlasskanal wieder ab. Sobald der Druck im Ventileinlasskanal unter den Schwellwert gesunken ist, wird der Druckentlastungskanal durch die Überdruckeinheit wieder verschlossen.

Im Hinblick auf die Überdruckeinheit ist es vorteilhaft, wenn diese als passives Element ausgestaltet ist, das beim Erreichen des vorbestimmten Drucks bzw. Überdrucks im Ventileinlasskanal den Druckentlastungskanal selbstständig öffnet. Diese selbstständige Betätigung ermöglicht einen zuverlässigen Druckabbau, da dieser nicht von einer aktiven Betätigung oder von der Versorgung mit Strom abhängt. Somit kann zu jeder Zeit eine zuverlässige Druckentlastung gewährleistet werden kann.

Weiterhin hat es sich als vorteilhaft herausgestellt, wenn der Druckentlastungskanal mit dem Ventileinlasskanal verbunden ist. Durch diese Verbindung kann im Ventileinlasskanal und im Druckentlastungskanal vor der Überdruckeinheit der gleiche Druck anliegen. Bei einer Überschreitung des zulässigen Drucks im Ventileinlasskanal wird somit auch die Überdruckeinheit mit demselben Druck beaufschlagt, so dass diese dann zum Druckabbau den Druckentlastungskanal öffnen kann. Die Überdruckeinheit kann dann, insbesondere in Strömungsrichtung, vor dem Hauptventilsitz angeordnet sein. In konstruktiver Hinsicht kann sich der Druckentlastungskanal winklig, insbesondere rechtwinklig, zum Ventileinlasskanal erstrecken und als Bohrung ausgestaltet sein. Vorteilhaft ist es, wenn der Druckentlastungskanal schmaler ausgestaltet ist als der Ventileinlasskanal, da dies zu einer geringeren Baugröße führt und es oft schon reicht, relativ kleine Mengen Fluid aus dem Ventileinlasskanal abzulassen, um einen Druckanstieg über den Schwellwert im Ventileinlasskanal zu verhindern.

Alternativ kann der Druckentlastungskanal zum Abbau von Druckspitzen im Ventilauslasskanal auch mit dem Ventilauslasskanal verbunden sein. Auch im Ventilauslasskanal können Druckspitzen auftreten, die das Ventil schädigen können. Dies kann bspw. dann passieren, wenn dem Ventil in Fluidrichtung nachgeschaltete Ventile oder Armaturen defekt sind und es bspw. zu Rückströmungen kommt. Insofern kann die Überdruckeinheit, insbesondere in Strömungsrichtung, auch hinter dem Hauptventilsitz angeordnet sein.

Der Druckentlastungskanal kann einen Druckentlastungszulaufkanal und einem Druckentlastungsablaufkanal aufweisen und die Überdruckeinheit kann zwischen diesen beiden Kanälen angeordnet sein. Der Druckentlastungszulaufkanal kann mit dem Ventileinlasskanal verbunden sein und wenn die Überdruckeinheit den Druckentlastungskanal öffnet, kann dann Fluid vom Druckentlastungszulaufkanal zum Druckentlastungsauslaufkanal strömen. Der Druckentlastungsauslaufkanal kann konzentrisch zu der Hauptschließachse des Hauptschließelements ausgestaltet sein, was im Hinblick auf die Fertigung des Ventilgehäuses vorteilhaft ist, da der Druckentlastungsablaufkanal in das Ventilgehäuse gebohrt werden kann. Zum Abbau von Druckspitzen im Ventilauslasskanal kann der Druckentlastungszulaufkanal auch mit dem Ventilauslasskanal verbunden sein.

Im Hinblick auf den Druckentlastungskanal hat es sich weiterhin als vorteilhaft herausgestellt, wenn der Druckentlastungskanal als ein mit dem Ventilauslasskanal verbundener Bypasskanal ausgestaltet ist. Durch einen Bypasskanal, der mit dem Ventilauslasskanal verbunden ist, kann im Falle eines Druckanstiegs über den Schwellwert Fluid von dem Ventileinlasskanal zum Ventilauslasskanal strömen, auch wenn der Hauptventilsitz geschlossen ist. Durch den Bypasskanal kann somit der Hauptventilsitz überbrückt werden. Bei dieser Ausgestaltung ist dann der Druckentlastungsablaufkanal mit dem Ventilauslasskanal verbunden.

In einer alternativen Ausgestaltung kann ein Ende des Druckentlastungskanals, insbesondere des Druckentlastungsauslaufkanals, als Ablauf ausgestaltet sein. Der Druckentlastungskanal kann bei dieser Ausgestaltung auf der einen Seite mit dem Ventileinlasskanal verbunden und auf der anderen Seite offen sein, so dass bei einem Druckanstieg im Ventileinlaufkanal über den Schwellwert Fluid durch den Druckentlastungskanal aus dem Ventil fließen kann. Offen bedeutet insoweit, dass das entsprechende Ende des Druckentlastungskanals aus dem Ventil herausführt, gleichwohl kann das entsprechende Ende aber auch mit weiteren Leitungen verbunden oder verbindbar sein. Vorteilhaft ist es in diesem Zusammenhang, wenn das Ende des Druckentlastungskanals als Anschlussstück für Rohre oder Schläuche ausgestaltet ist. Das Fluid kann bei dieser Ausgestaltung durch den Druckentlastungskanal, bspw. in einen Auffangtank, fließen. Der Druckentlastungsablaufkanal kann parallel zu dem Ventilauslasskanal angeordnet sein, was eine kompakte Bauweise ermöglicht.

Diese zweite Ausgestaltung bietet sich insbesondere dann an, wenn ein unzulässiger Überdruck im Ventileinlasskanal zwar abgebaut werden soll, jedoch dabei kein Fluid in den Ventilauslasskanal eintreten soll bzw. darf, wie dies bei dem vorstehend beschriebenen Bypasskanal der Fall wäre.

Im Hinblick auf die Ausgestaltung der Überdruckeinheit hat es sich als vorteilhaft herausgestellt, wenn die Überdruckeinheit einen Überdruckventilsitz aufweist, der Teil des Ventilgehäuses ist. Dadurch, dass der Überdruckventilsitz Bestandteil des Ventilgehäuses ist, ergibt sich ein sehr kompakter Ventilaufbau. Der Überdruckventilsitz und der Hauptventilsitz können somit einstückig miteinander verbunden sein. Das Ventilgehäuse kann neben dem Ventileinlasskanal, dem Ventilauslasskanal, dem Hauptventilsitz und dem Druckentlastungskanal auch den Überdruckventilsitz aufweisen. Das Ventilgehäuse kann somit als zentrale Baueinheit ausgestaltet sein und es müssen dann bei der Montage des Ventils nur noch wenige weitere Elemente an dieser befestigt werden.

Ferner hat es sich als vorteilhaft herausgestellt, wenn die Überdruckeinheit ein gegenüber dem Überdruckventilsitz bewegbares Überdruckschließelement aufweist. Das Überdruckschließelement kann beim Erreichen des unzulässigen Überdrucks im Ventileinlasskanal sich selbstständig bewegen und somit den Druckentlastungskanal öffnen. Vorteilhaft ist es, wenn das Überdruckschließelement axial bewegbar ist. Wenn im Ventileinlasskanal kein unzulässiger Überdruck anliegt, liegt das Überdruckschließelement auf dem Überdruckventilsitz und verschließt somit den Druckentlastungkanal. Es kann dann kein Fluid vom Druckentlastungszulaufkanal zum Druckentlastungsablaufkanal fließen. Erreicht der Druck im Ventileinlaufkanal einen unzulässigen Überdruck, so führt dieser Überdruck dazu, dass das Überdruckschließelement vom Überdruckventilsitz abhebt und den Druckentlastungskanal öffnet.

Weiterhin hat es sich im Hinblick auf die Bewegung des Überdruckschließelements als vorteilhaft herausgestellt, wenn das Überdruckschließelement und das gegenüber dem Hauptventilsitz bewegbare Hauptschließelement unterschiedliche Schließachsen aufweisen. Die beiden Schließachsen können beispielsweise parallel zueinander versetzt sein oder auch winklig zueinander angeordnet sein. Wenn der Druckentlastungskanal als Bypasskanal ausgestaltet ist, können die beiden Schließachsen parallel zueinander versetzt sein und wenn ein Ende des Druckentlastungskanals als Ablauf ausgestaltet ist, können die beiden Schließachsen winkelig, insbesondere rechtwinklig zueinander angeordnet sein.

In Hinblick auf die Bewegungsrichtungen des Überdruckschließelements und des Hauptschließelements hat es sich als vorteilhaft herausgestellt, wenn diese entgegengesetzte Öffnungsrichtungen aufweisen. Die Bewegungsrichtung des Überdruckschließelements beim Öffnen des Überdruckventilsitzes kann somit der Bewegungsrichtung des Hauptschließelements beim Schließen des Hauptventilsitzes entsprechen oder umgekehrt. Weiterhin ist es vorteilhaft, wenn sich das Überdruckschließelement und das Hauptschließelement, insbesondere in Bezug zum Ventileinlaufkanal, gegenüberliegen. Dies ermöglicht eine einfache Zugänglichkeit, da beide Schließelemente von unterschiedlichen Seiten des Ventils zugänglich sein.

Weiterhin hat es sich als vorteilhaft herausgestellt, wenn das Überdruckschließelement ein Dichtelement zur Dichtung des Druckentlastungskanals aufweist. Mit dem Dichtelement kann der Druckentlastungszulaufkanal gegenüber dem Druckentlastungsablaufkanal abgedichtet werden, so dass in der geschlossenen Stellung kein Fluid von dem Druckentlastungszulaufkanal zum Druckentlastungsablaufkanal strömen kann. Das Dichtelement kann im Überdruckschließelement integriert sein und von diesen an drei Seiten umschlossen sein. Das Dichtelement, insbesondere die nicht umschlossene Seite des Dichtelements kann in der geschlossenen Stellung am Überdruckventilsitz anliegen. Die Integration des Dichtelements führt zu einer guten Stabilität. Das Dichtelement kann nach Art eines Zylinders ausgestaltet sein.

Zur Gewährleistung einer zuverlässigen Bewegung des Überdruckschließelements hat es sich als vorteilhaft herausgestellt, wenn das Ventilgehäuse eine Führung aufweist, in der das Überdruckschließelement geführt ist. Durch die Führung kann verhindert werden, dass sich das Überdruckschließelement verkantet und so den Druckentlastungskanal nicht mehr zuverlässig öffnen oder schließen kann. Die Führung kann als Axialführung ausgestaltet sein, in der sich das Überdruckschließelement axial bewegen kann. Die Führung kann nach Art einer zylinderförmigen Bohrung ausgestaltet sein.

Es hat sich weiterhin als vorteilhaft herausgestellt, wenn das Überdruckschließelement über ein Federelement gegen den Überdruckventilsitz vorgespannt ist. Durch das Federelement kann verhindert werden, dass das Überdruckschließelement den Druckentlastungskanal unbeabsichtigt freigibt. Aufgrund der Federkraft kann sich das Überdruckschließelement erst dann bewegen, wenn im Ventileinlasskanal ein vorgegebener Überdruck herrscht, der groß genug ist, um die Federkraft des Federelements zu überwinden. Das Überdruckschließelement kann sich dann bei einem zu hohen Druck im Ventileinlasskanal entgegen der Federkraft des Federelements bewegen. Bei dieser Bewegung kann das Federelement gespannt werden, bis sich ein Gleichgewicht der herrschenden Kräfte einstellt. Wenn der Druck durch die Öffnung des Druckentlastungskanals im Ventileinlaufkanal wieder unter den zulässigen Schwellwert gefallen ist, reicht die Kraft nicht mehr aus, um das Federelement zusammenzudrücken, so dass sich das Federelement wieder entspannt und das Überdruckschließelement auf den Überdruckventilsitz drückt. Durch das Federelement kann sich das Überdruckschließelement somit bei dem Erreichen eines unzulässigen Überdrucks selbstständig bewegen und den Druckentlastungskanal öffnen.

Im Hinblick auf die Verbindung des Federelements und des Überdruckschließelements hat es sich als vorteilhaft herausgestellt, wenn das Überdruckschließelement im Federelement gelagert ist. Diese Ausgestaltung gewährleistet eine zuverlässige Bewegung des Überdruckschließelements und eine zuverlässige Stauchung des Federelements. Das Federelement kann als Spiralfeder ausgestaltet sein und ein Ende des Überdruckschließelements kann in die Spiralfeder hinreichen. Dies ermöglicht eine zuverlässige und stabile Bewegung des Überdruckschließelements. Ein Ende des Überdruckschließelements kann zapfenförmig ausgestaltet sein und sich in das Innere des Federelements hinein erstrecken. Dadurch kann das Überdruckschließelement eine axiale Stützwirkung für das Federelement bereitstellen. Das Federelement kann an einer Schulter des Überdruckschließelements anliegen und über diese eine in Richtung des Überdruckventilsitzes gerichtete Kraft auf das Überdruckschließelement aufbringen.

Im Hinblick auf das Federelement hat es sich weiterhin als vorteilhaft herausgestellt, wenn die Federkraft des Federelements einstellbar ist. Durch die Einstellbarkeit des Federelements kann gesteuert werden, ab welchem Überdruck im Ventileinlasskanal das Überdruckschließelement vom Überdruckventilsitz abhebt. Wird beispielsweise nur ein geringer Überdruck im Ventileinlasskanal toleriert, kann die Federkraft entsprechend gering eingestellt werden, so dass dann der Druckentlastungskanal schon bei einem geringen Überdruck geöffnet wird. Ist die Federkraft bzw. die Federvorspannung des Federelements hingegen groß, so bedarf es eines entsprechend größeren Überdrucks im Ventileinlasskanal, um das Überdruckschließelement zu bewegen, das Federelement zu stauchen und so den Druckentlastungskanal zu öffnen.

Ferner hat sich als vorteilhaft herausgestellt, wenn das Ventilgehäuse im Bereich eines Endes des Überdruckschließelements offen ist. Diese Ausgestaltung ermöglicht eine einfache Montage. Denn das Schließelement und das Federelement können über die Öffnung sehr einfach in das Ventilgehäuse eingebracht werden. Auch eine Wartung oder ein Austausch der Komponenten ist sehr einfach möglich.

Im Hinblick auf die Öffnung des Ventilgehäuses hat es sich weiterhin als vorteilhaft herausgestellt, wenn ein Verschlusselement zum Verschließen der Öffnung vorgesehen ist. Über das Verschlusselement kann die Öffnung im Ventilgehäuse sicher verschlossen werden. Bei der Montage kann zunächst das Überdruckschließelement und das Federelement in das Ventilgehäuse eingebracht werden und dann kann die Öffnung durch das Verschlusselement verschlossen und die Elemente im Ventilgehäuse gesichert werden.

Um einen ungewollten Fluidaustritt im Bereich der Öffnung zu verhindern, kann das Verschlusselement abgedichtet sein, insbesondere über einen O-Ring. Die Dichtung kann somit auch bei geöffnetem Druckentlastungskanal verhindern, dass unbeabsichtigt Fluid aus dem Ventil austritt.

Das Verschlusselement kann ein Gewinde aufweisen, über welches es in die die Öffnung des Ventilgehäuses einschraubbar ist. Weiterhin ist es auch möglich, dass das Verschlusselement auf das Ventilgehäuse aufschraubbar ist. In diesem Fall kann dann das Verschlusselement ein Innengewinde und das Ventilgehäuse ein Außengewinde aufweisen. In konstruktiver Hinsicht hat es sich jedoch als vorteilhaft herausgestellt, wenn das Verschlusselement ein Außengewinde und das Ventilgehäuse ein Innengewinde aufweist.

Das Federelement kann sich auf dem Verschlusselement abstützen, so dass über die Stellung des Verschlusselements die Federkraft des Federelements eingestellt werden kann. Wird das Verschlusselement bspw. weit in das Ventilgehäuse eingeschraubt oder auf dieses aufgeschraubt, so kann dadurch das Federelement stärker vorgespannt werden. In diesem Fall wird der Druckentlastungskanal dann erst bei einem höheren Überdruck geöffnet. Wird das Verschlusselement nicht so weit in das Ventilgehäuse ein- bzw. aufgeschraubt, wird die Feder weniger stark vorgespannt. Das Dichtelement muss derart ausgestaltet sein, dass eine zuverlässige Dichtung gewährleistet wird, unabhängig davon, wie weit das Verschlusselement in das Ventilgehäuse eingeschraubt bzw. auf dieses aufgeschraubt ist. In konstruktiver Hinsicht kann das Verschlusselement als Verschlussschraube oder als Schraubdeckel ausgestaltet sein, insbesondere dann, wenn die Druckentlastungsvorrichtung als Bypasskanal ausgestaltet ist. Weiterhin kann das Verschlusselement eine Führung für das Federelement aufweisen, so dass dieses nur in axialer Richtung gestaucht wird und nicht seitlich ausbrechen kann.

Weiterhin hat es sich als vorteilhaft herausgestellt, wenn sich der Druckentlastungskanal durch das Verschlusselement hindurch erstreckt. Diese Ausgestaltung ist insbesondere dann vorteilhaft, wenn der Druckentlastungskanal nicht als Bypass ausgestaltet ist, sondern dieser einen Ablauf umfasst. In diesem Fall kann dann überschüssiges Fluid aus dem Ventileinlasskanal durch das Verschlusselement aus dem Ventil hinausfließen und ggf. in ein angebundenes Rohr- oder Schlauchsystem fließen. Insofern kann das Verschlusselement dann als Anschlussstelle für ein Rohr oder einen Schlauch ausgestaltet sein. Beispielsweise kann die äußere Oberfläche des Verschlusselements geriffelt ausgestaltet sein, so dass ein, insbesondere flexibler, Schlauch auf das Verschlusselement aufgesteckt und dann aufgrund der geriffelten Oberfläche nicht ohne weiteres wieder von dem Verschlusselement abrutschen kann. Der Druckentlastungskanal bzw. der Druckentlastungsablaufkanal kann sich durch das Verschlusselement erstrecken, so dass Fluid aus dem Verschlusselement austreten kann.

Weiterhin kann eine Steuereinheit vorgesehen sein, über die das Hauptschließelement gegenüber dem Hauptventilsitz bewegbar ist. Über die Steuereinheit kann somit der vom Ventileinlasskanal zum Ventilauslasskanal strömende Fluidstrom gesteuert werden kann. Durch die Steuerung des Abstandes zwischen dem Hauptschließelement und dem Hauptventilsitz kann die das Ventil durchströmende Fluidmenge reguliert werden. Die Steuereinheit kann lösbar mit dem Ventilgehäuse verbunden sein. Dies ermöglicht eine einfache Ventilmontage. Weiterhin kann das Hauptschließelement Teil der Steuereinheit bzw. in dieser integriert sein. Die Steuereinheit kann als elektromagnetische Steuereinheit ausgebildet sein, wodurch die Position des Hauptschließelements sehr exakt gesteuert werden kann. Die Steuereinheit kann aus der Ferne, bspw. der Funk, automatisch per Computer oder/und auch manuell per Hand betätigbar sein.

Im Hinblick auf die eingangs genannte Aufgabe wird ferner ein Verfahren zum Abbau des Drucks in einem Ventileinlasskanal eines Ventils, insbesondere eines Elektromagnetventils, vorgeschlagen. Das Ventil umfasst ein Ventilgehäuse, das den Ventileinlasskanal, einen Ventilauslasskanal und ein zwischen dem Ventileinlasskanal und dem Ventilauslasskanal angeordneten Hauptventilsitz aufweist, und das Ventilgehäuse weist einen Druckentlastungskanal mit einer Überdruckeinheit auf, wobei der Druckentlastungskanal zum Druckabbau von der Überdruckeinheit geöffnet wird.

Vorteilhaft ist es, wenn das Ventil in der vorstehend beschriebenen Weise ausgestaltet ist. Es ergeben sich die bereits im Hinblick auf das Ventil beschriebenen Vorteile.

Weitere Ausgestaltungen und Vorteile der Erfindung sollen nachfolgend anhand der in den Figuren gezeigten Ausführungsbeispielen näher erläutert werden. Darin zeigen:
- Fig. 1: eine Seitenansicht eines Ventils gemäß einer ersten Ausführungsform;
- Fig. 2: eine Schnittansicht gemäß Fig. 1;
- Fig. 3: eine vergrößerte Ansicht der Überdruckeinheit gemäß den Fig. 1 und 2;
- Fig. 4: ein Ventil in einer Seitenansicht gemäß einer zweiten Ausführungsform der Erfindung;
- Fig. 5: eine Schnittansicht gemäß der Fig. 4;
- Fig. 6: eine vergrößerte Detailansicht der Überdruckeinheit gemäß Fig. 5.

Über das in den Figuren dargestellte Ventil 1 kann ein Fluidstrom gesteuert werden. Das Ventil 1 weist ein Ventilgehäuse 4 mit einem Ventileinlasskanal 2 auf, durch den das Fluid in das Ventil 1 einströmen kann und einen Ventilauslasskanal 3, durch welchen das Fluid das Ventil 1 wieder verlassen kann. Zwischen dem Ventileinlasskanal 2 und dem Ventilauslasskanal 3 ist ein Hauptventilsitz 7 mit einem gegenüber dem Hauptventilsitz 7 bewegbar angeordneten Hauptschließelement 8 angeordnet.

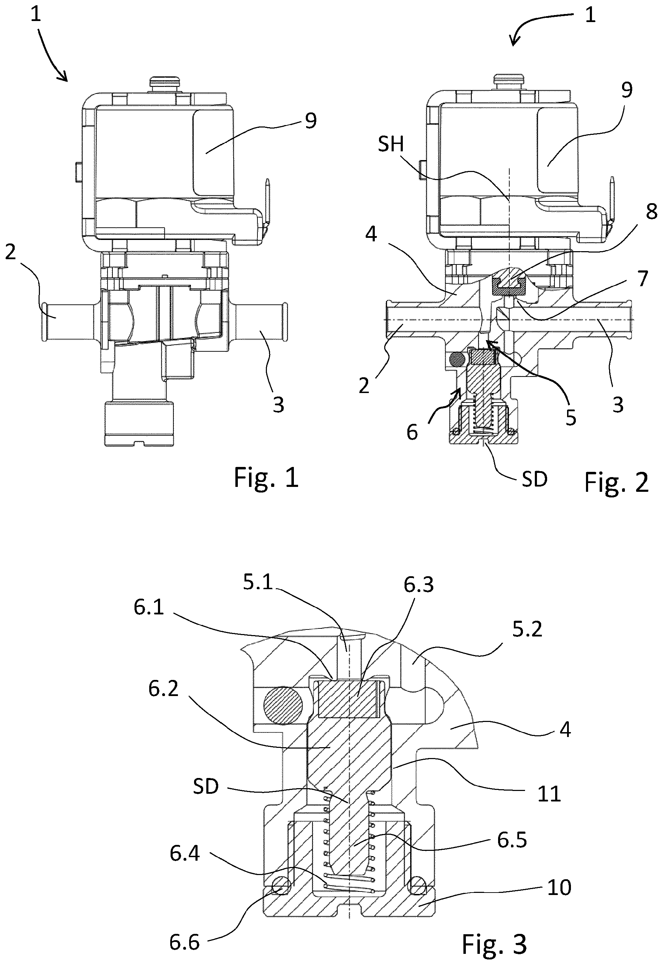

In der Fig. 2 ist das Ventil 1 in der geschlossenen Stellung dargestellt, bei welcher das Hauptschließelement 8 auf dem Hauptventilsitz 7 aufliegt und diesen somit verschließt. In dieser Position kann kein Fluid vom Ventileinlasskanal 2 zum Ventilauslasskanal 3 strömen. Wenn ein entsprechender Fluidstrom freigegeben werden soll, muss das Hauptschließelement 8 vom Hauptventilsitz 7 abgehoben werden. Über den Abstand zwischen dem Hauptschließelement 8 und dem Hauptventilsitz 7 kann zudem auch der Fluidstrom reguliert werden. Denn je größer der Abstand ist, desto mehr Fluid kann vom Ventileinlasskanal 2 zum Ventilauslasskanal 3 strömen.

Wie dies ebenfalls in der Darstellung der Fig. 2 zu erkennen ist, ist oberhalb des bewegbaren Hauptschließelements 8 eine Steuereinheit 9 vorgesehen, über welche das Hauptschließelement 8 auf und ab bewegt werden kann. Bei dieser Steuereinheit 9 handelt es sich um eine elektromagnetische Steuereinheit 9, die die Position des Hauptschließelements 8 über einen Magneten regelt.

Wenn das Ventil 1 geschlossen ist und kein Fluid vom Ventileinlasskanal 2 zum Ventileinlasskanal 3 strömen kann, bildet der Ventileinlasskanal 2 eine Art Sackgasse, so dass sich das Fluid vor dem Hauptschließelement 8 staut. Kommt es nun zu einem Druckstoß bzw. einem Druckanstieg in dem mit dem Ventileinlasskanal 2 verbundenen Leistungssystem, kann es im schlimmsten Fall zu einer Zerstörung von Ventilkomponenten kommen, wenn der Überdruck nicht auf ein akzeptables Maß abgebaut werden kann.

Zum Druckabbau weist das Ventilgehäuse 4 jedoch zusätzlich einen Druckentlastungskanal 5 und eine Überdruckeinheit 6 auf, über die der Druck im Ventileinlasskanal 2 abgebaut werden kann.

Gemäß einer ersten Ausgestaltung der Erfindung, die in den Fig. 1 bis 3 dargestellt ist, ist der Druckentlastungskanal 5 als Bypasskanal ausgestaltet und auf der einen Seite mit dem Ventileinlasskanal 2 und auf der anderen Seite mit dem Ventilauslasskanal 3 verbunden. Bei einem Druckanstieg im Ventileinlasskanal 2 kann es somit zu einer Fluidströmung durch den Druckentlastungskanal 5 zum Ventilauslasskanal 3 kommen, bei dem das Hauptschließelement 8 überbrückt wird. Dies führt dann zwar dazu, dass trotz dem geschlossenen Hauptschließelement 8, eine gewisse Menge an Fluid in den Ventilauslasskanal 3 eintreten kann, dies kann aber in den meisten Fällen toleriert werden, um eine Beschädigung des Ventils 1 zu verhindern.

Wenn im Ventileinlasskanal 3 kein kritischer Überdruck vorherrscht, ist der Druckentlastungskanal 5 über die Überdruckeinheit 6, so wie dies in der Darstellung der Fig. 3 zu erkennen ist, geschlossen. Der Druckentlastungskanal 5 ist dann im Grunde in zwei Teilbereiche unterteilt, nämlich einen Druckentlastungszulaufkanal 5.1, der mit dem Ventilzulaufkanal 2 verbunden ist und einen Druckentlastungsablaufkanal 5.2, der mit dem Ventilauslasskanal 3 verbunden ist. Ein Fluidstrom zwischen diesen zwei Teilbereichen 5.1, 5.2 wird durch die Überdruckeinheit 6 verhindert. Wenn nun der Druck im Ventileinlaufkanal 2 einen vorbestimmten Überdruck überschreitet, öffnet die Überdruckeinheit 6 selbstständig den Druckentlastungskanal 5 so lange, bis der Überdruck wieder auf ein tolerables Maß abgesunken ist.

Die Ausgestaltung der Überdruckeinheit 6 soll nun nachfolgend anhand der vergrößerten Detailansicht der Fig. 3 näher erläutert werden. Die Überdruckeinheit 6 weist einen Überdruckventilsitz 6.1 und ein gegenüber diesem bewegbares Überdruckschließelement 6.2 auf. Bei einem Überdruck im Ventileinlaufkanal 2 liegt aufgrund der Verbindung des Druckentlastungszulaufkanals 5.1 derselbe Druck auch am Überdruckschließelement 6.2 an. Das Überdruckschließelement 6.2 ist in einer Führung 11 des Ventilgehäuses 4 geführt und in Richtung der Druckentlastungsschließachse SD axial und parallel zu der Hauptschließachse SH des Hauptschließelements 8 bewegbar. Wenn der Überdruck einen gewissen Schwellwert überschreitet, wird das Überdruckschließelement 6.2 in axialer Richtung bewegt und vom Überdruckventilsitz 6.1 abgehoben. Das Fluid kann dann durch den Druckentlastungskanal 5 strömen, so dass der Überdruck im Ventileinlasskanal 2 abgebaut wird.

Um eine zuverlässige Dichtung des Druckentlastungskanals 5 zu gewährleisten, weist das Überdruckschließelement 6.2 an dem dem Überdruckventilsitz 6.1 zugewandten Ende ein Dichtelement 6.3 auf, welches in der geschlossenen Stellung gegen den Überdruckventilsitz 6.1 gedrückt wird. Das Dichtelement 6.3 ist aus einem weichen Material, welches sich in gewissem Maße elastisch verformen kann, wenn es auf den Überdruckventilsitz 6.1 gedrückt wird und so den Druckentlastungskanal 5 abdichtet. Um dem im Gegensatz zum Material des Überdruckschließelements 6.2 weicheren Material des Dichtelements 6.2 genug Halt zu geben, ist das Dichtelement 6.2 im Überdruckschließelement 6.2 derart aufgenommen, dass es von drei Seiten gestützt wird und lediglich eine Seite frei liegt. In der den Druckentlastungskanal 5 verschließenden Position wird genau diese freie Seite gegen den Überdruckventilsitz 6.1 gedrückt, so wie dies in der Fig. 3 zu erkennen ist.

Wie dies zudem in der Fig. 3 zu erkennen ist, weist die Überdruckeinheit 6 ein als Spiralfeder ausgestaltetes Federelement 6.4 auf, welches das Schließelement 6.2 gegen den Überdruckventilsitz 6.1 vorspannt. Damit die Überdruckeinheit 6 den Druckentlastungskanal 5 freigibt, muss somit der im Ventileinlasskanal 2 anliegende Überdruck groß genug sein, um das Überdruckschließelement 6.2 entgegen der Kraft des Federelements 6.4 zu bewegen. Dadurch dass bei einem geöffnetem Druckentlastungskanal 5 Fluid aus dem Ventileinlasskanal 2 ausströmt, führt dies in der Regel zu einem recht raschen Druckabfall im Ventileinlasskanal 2. Sobald der Druck nicht mehr groß genug ist, um das Überdruckschließelement 6.2 entgegen der Kraft des Federelements 6.4 von dem Überdruckventilsitz 6.1 abzuheben, drückt das Federelement 6.4 das Überdruckschließelement 6.2 zurück auf den Überdruckventilsitz 6.1 und verschließt so den Druckentlastungskanal 5. Über die Kraft bzw. die Vorspannkraft des Federelements 6.4 lässt sich somit der Schwelldruck, ab welchem der Druckentlastungskanal 5 geöffnet wird, einstellen.

Um eine möglichst radialsteife Verbindung zwischen dem Federelement 6.4 und dem Überdruckschließelement 6.2 zu erreichen, weist das Überdruckschließelement 6.2 ein zapfenförmiges Ende 6.5 auf, welches dem Ende, in bzw. an dem das Dichtelement 6.3 angeordnet ist, gegenüberliegt. Das zapfenförmige Ende 6.5 erstreckt sich in das Federelement 6.4 hinein, so dass sich das Federelement 6.4, genauso wie das Überdruckschließelement 6.2, nur in axialer Richtung entlang der Druckentlastungsschließachse SD bewegen kann bzw. entlang dieser Achse gestaucht wird und sich nicht in radialer Richtung verformen kann.

Wie dies ferner in der Fig. 3 zu erkennen ist, ist der Überdruckventilsitz 6.1 Teil des Ventilgehäuses 4, so dass der Ventileinlasskanal 2, der Ventilauslasskanal 3, der Hauptventilsitz 7, der Druckentlastungskanal 5 und auch der Überdruckventilsitz 6.1 als eine einzige Baueinheit ausgestaltet sind. Die übrigen Komponenten der Überdruckeinheit 6 sind lösbar mit dem Ventilgehäuse 4 verbunden, was sowohl die Montage als auch die Wartung und den Austausch einzelner Komponenten vereinfacht. Das Ventilgehäuse 4 weist eine topfförmige Aufnahme für die übrigen Komponenten der Überdruckeinheit 6 auf, die an einem Ende offen ist, so dass die Komponenten nacheinander in dem Ventilgehäuse angeordnet werden. Zunächst wird bei der Montage das Überdruckschließelement 6.2 in das Ventilgehäuse 4 eingebracht und dann das Federelement 6.4 auf das zapfenförmige Ende 6.5 des Überdruckschließelements 6.2 aufgesteckt.

Um das Ventilgehäuse 4 dann zu verschließen, ist ein Verschlusselement 10 vorgesehen, welches nach Art einer Verschlussschraube ausgestaltet ist und das Überdruckschließelement 6.2 und das Federelement 6.4 im Ventilgehäuse 4 sichert. Beim Einschrauben des Verschlusselements 10 in das Ventilgehäuse 4 wird das Federelement 6.4 gestaucht und somit vorgespannt. Über die Einschraubtiefe kann die Vorspannung des Federelements 6.4 eingestellt werden und daher auch der Schwelldruck, ab welchem die Überdruckeinheit 6 den Druckentlastungskanal 5 öffnet.

Mittels der in den Fig. 1 bis 3 gezeigten Vorrichtung kann somit ein Überdruck im Ventileinlaufkanal 2 rasch abgebaut werden, indem meist nur kleine Fluidmengen durch den Druckentlastungskanal in den Ventilauslasskanal 3 strömen. Eine Beschädigung des Ventils 1 kann somit verhindert werden.

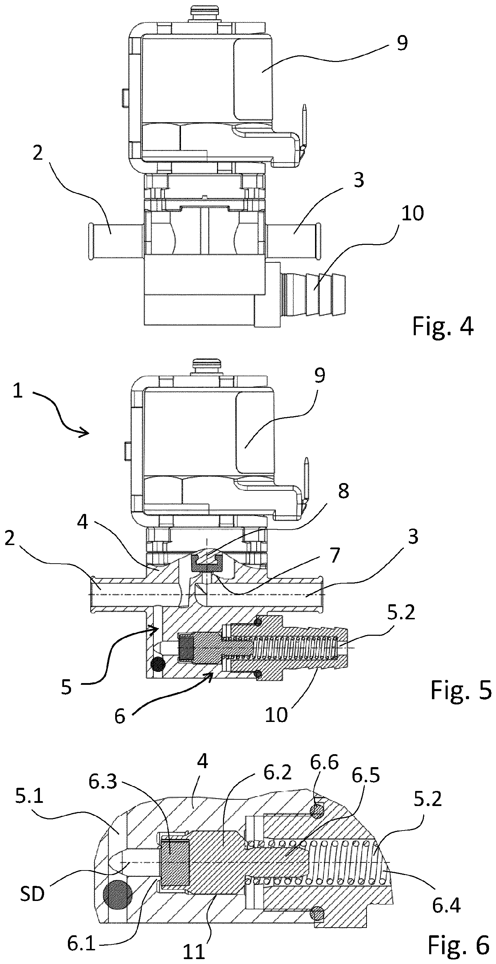

Anhand der Darstellungen in den Fig. 4 bis 6 soll nun nachfolgend ein zweites Ausführungsbeispiel eines erfindungsgemäßen Ventils 1 beschrieben werden. Der Grundaufbau des Ventils 1 stimmt im Wesentlichen mit dem des Ventils 1 der ersten drei Figuren überein, so dass dahingehend auf die obenstehende Beschreibung verwiesen wird. Auch die Ausgestaltung des Überdruckschließelements 6.2, des Dichtelements 6.3 und des Überdruckventilsitzes 6.1 sind im Wesentlichen identisch.

Im Gegensatz zu dem Ausführungsbeispiel der Fig. 1 bis 3 ist bei dem zweiten Ausführungsbeispiel der Druckentlastungskanal 5 jedoch nicht als Bypasskanal ausgestaltet, der den Ventileinlaufkanal 2 mit dem Ventilauslaufkanal 3 verbindet, sondern der Druckentlastungskanal 5 ist nach außen geführt und bildet somit im Grunde einen zweiten Ventilauslass. Weiterhin ist aus konstruktiven Gründen bei dieser Ausgestaltung die Druckentlastungsschließachse SD nicht parallel zu der Hauptschließachse SH, sondern in einem rechten Winkel zu dieser ausgerichtet. Der Druckentlastungszulaufkanal 5.1 ist daher auch deutlich länger als bei der ersten Variante ausgestaltet und weist eine 90 Grad-Umlenkung auf.

Das Ventilgehäuse 4 weist ebenfalls eine Führung 11 auf, in der das Überdruckschließelement 6.2 in axialer Richtung entgegen der Kraft des Federelements 6.4 bewegbar ist. Wenn der Druck im Ventileinlaufkanal 2 bzw. im Druckentlastungszulaufkanal 5.1 einen vorgegebenen Schwellwert übersteigt, bewegt das Fluid das Druckentlastungsschließelement 6.2 entgegen der Kraft des Federelements 6.2, so dass das Dichtelement 6.3 vom Überdruckventilsitz 6.1 abhebt. Zumindest insofern ist die Ausgestaltung der Überdruckeinheit 6 identisch mit der des ersten Ausführungsbeispiels. Es ist jedoch so, dass das Fluid bei dem zweiten Ausführungsbeispiel vom Ventileinlaufkanal 2 durch den Druckentlastungszulaufkanal 5.1 und dann am Überdruckschließelement 6.2 vorbei zum Druckentlastungsablaufkanal 5.2 strömt, von wo aus das Fluid das Ventil 1 dann verlassen kann.

Damit das Fluid aus dem Ventil 1 herausströmen kann, ist das Verschlusselement 10 nicht wie bei der ersten Ausgestaltungsform als geschlossene Verschlussschraube ausgestaltet, sondern dieses weist einen Ablauf auf, durch den das Fluid austreten kann. Das Verschlusselement 10 weist auf dessen Außenseite eine geriffelte Sägezahlstruktur auf, die es ermöglicht, einen Schlauch auf das Verschlusselement 10 aufzustecken. Über den Schlauch kann dann das zur Druckminderung abgelassene Fluid abtransportiert werden.

Wie dies anhand der Fig. 5 und 6 zu erkennen ist, ist das Verschlusselement 10, insbesondere da dieses mit einem Schlauch verbunden werden kann und der Schlauch eine gewisse Kontaktfläche benötigt, deutlich länger als das Verschlusselement 10 der ersten Variante. Da sich das Federelement 6.4 auf bzw. in dem Verschlusselement 10 abstützt, ist demnach auch das Federelement 6.4 deutlich länger. Bei der zweiten Variante erstreckt sich der Druckentlastungskanal 5 bzw. der Druckentlastungsablaufkanal 5.2 durch das Federelement 6.4. Auch ist eine als O-Ring ausgestaltete Dichtung 6.6 vorgesehen, das Verschlusselement 10 gegenüber dem Ventilgehäuse 4 abdichtet.

Im Unterschied zu dem ersten Ausführungsbeispiel fließt beim zweiten Ausführungsbeispiel kein Fluid in den Ventilauslasskanal 2. Diese Variante bietet daher insbesondere dann Vorteile, wenn bei einem geschlossenen Hauptschließelement 8 kein Fluid von dem Ventileinlasskanal 2 zum Ventilauslasskanal 3 strömen darf.

### Bezugszeichen:

- 1: Ventil
- 2: Ventileinlasskanal
- 3: Ventilauslasskanal
- 4: Ventilgehäuse
- 5: Druckentlastungskanal
- 5.1: Druckentlastungszulaufkanal
- 5.2: Druckentlastungsablaufkanal
- 6: Überdruckeinheit
- 6.1: Überdruckventilsitz
- 6.2: Überdruckschließelement
- 6.3: Dichtelement
- 6.4: Federelement
- 6.5: Zapfenförmiges Ende
- 6.6: Dichtring
- 7: Hauptventilsitz
- 8: Hauptschließelement
- 9: Steuereinheit
- 10: Verschlusselement
- 11: Führung

- SH: Hauptschließachse
- SD: Druckentlastungsschließachse

## Patentansprüche

1. Ventil, insbesondere Elektromagnetventil, zur Steuerung eines Fluidstroms mit einem Ventilgehäuse (4), das einen Ventileinlasskanal (2), einen Ventilauslasskanal (3) und ein zwischen dem Ventileinlasskanal (2) und dem Ventilauslasskanal (3) angeordneten Hauptventilsitz (5) aufweist,
**gekennzeichnet durch,**
dass das Ventilgehäuse (4) einen Druckentlastungskanal (5) mit einer den Druckentlastungskanal (5) zum Abbau von Druckspitzen öffnenden Überdruckeinheit (6) aufweist.

2. Vorrichtung nach Anspruch 1, **dadurch gekennzeichnet, dass** der Druckentlastungskanal (5) als ein mit dem Ventilauslasskanal (3) verbundener Bypasskanal ausgestaltet ist.

3. Vorrichtung nach einem der Ansprüche 1 oder 2, **dadurch gekennzeichnet, dass** ein Ende des Druckentlastungskanals (5) als Ablauf (5.2) ausgestaltet ist.

4. Vorrichtung nach einem der vorhergehenden Ansprüche, **dadurch gekennzeichnet, dass** die Überdruckeinheit (6) einen Überdruckventilsitz (6.1) aufweist, der Teil des Ventilgehäuses (4) ist.

5. Vorrichtung nach einem der vorhergehenden Ansprüche, **dadurch gekennzeichnet, dass** die Überdruckeinheit (6) ein gegenüber dem Überdruckventilsitz (6.1) bewegbares Überdruckschließelement (6.2) aufweist.

6. Vorrichtung nach Anspruch 5, **gekennzeichnet durch** ein gegenüber dem Hauptventilsitz (7) bewegbares Hauptschließelement (8), wobei das Hauptschließelement (8) und das Überdruckschließelement (6.2) unterschiedliche Schließachsen (SH, SD) aufweisen.

7. Vorrichtung nach Anspruch 6, **dadurch gekennzeichnet, dass** das Überdruckschließelement (6.2) und das Hauptschließelement (8) entgegengesetzte Öffnungsrichtungen aufweisen.

8. Vorrichtung nach einem der Ansprüche 5 bis 7, **dadurch gekennzeichnet, dass** das Ventilgehäuse (4) eine Führung (11) aufweist, in der das Überdruckschließelement (6.2) geführt ist.

9. Vorrichtung nach einem der Ansprüche 5 bis 8, **dadurch gekennzeichnet, dass** das Überdruckschließelement (6.2) über ein Federelement (6.4) gegen den Überdruckventilsitz (6.1) vorgespannt ist.

10. Vorrichtung nach Anspruch 9, **dadurch gekennzeichnet, dass** die Federkraft des Federelements (6.4) einstellbar ist.

11. Vorrichtung nach einem der vorhergehenden Ansprüche, **dadurch gekennzeichnet, dass** das Ventilgehäuse (4) im Bereich eines Endes des Überdruckschließelements (6.2) offen ist und die Öffnung durch ein Verschlusselement (10) verschließbar ist.

12. Vorrichtung nach Anspruch 11, **dadurch gekennzeichnet, dass** das Verschlusselement (10) in das Ventilgehäuse (4) einschraubbar oder auf das Ventilgehäuse (4) aufschraubbar ist.

13. Vorrichtung nach einem der Ansprüche 11 oder 12, **dadurch gekennzeichnet, dass** sich der Druckentlastungskanal (5.2) durch das Verschlusselement (10) erstreckt.

14. Verfahren zum Abbau des Drucks in einem Ventileinlasskanal (2) eines Ventils (1), insbesondere eines Elektromagnetventils, wobei das Ventil (1) ein Ventilgehäuse (4), das den Ventileinlasskanal (2), einen Ventilauslasskanal (3) und ein zwischen dem Ventileinlasskanal (2) und dem Ventilauslasskanal (3) angeordneten Hauptventilsitz (5) aufweist,
**dadurch gekennzeichnet,**
**dass** das Ventilgehäuse (4) einen Druckentlastungskanal (5) mit einer Überdruckeinheit (6) aufweist, wobei der Druckentlastungskanal (5) zum Druckabbau von der Überdruckeinheit (6) geöffnet wird.

15. Verfahren zum Druckabbau eines Ventils (1), **dadurch gekennzeichnet, dass** das Ventil (1) nach einem der Ansprüche 1 bis 13 ausgebildet ist.
